# EUROPEAN PATENT SPECIFICATION

(11) **EP 4 206 608 B1**
(45) Date of publication and mention of the grant of the patent: **21.01.2026**
(21) Application number: 22217099.5
(22) Date of filing: 29.12.2022
(51) Int. Cl.: G01C 21/20, G01C 21/30, E01H 4/02

(54) **VEHICLE AND METHOD FOR LOCATING A VEHICLE**
FAHRZEUG UND VERFAHREN ZUM ORTEN EINES FAHRZEUGS
VÉHICULE ET PROCÉDÉ DE LOCALISATION D'UN VÉHICULE

(30) Priority: 30.12.2021 IT 202100033116
(43) Date of publication of application: 05.07.2023
(73) Proprietor: PRINOTH S.p.A., 39049 Vipiteno (BZ) (IT)
(72) Inventor: KIRCHMAIR, Martin, 39049 VIPITENO (BZ) (IT)
(74) Representative: Studio Torta S.p.A.

(56) References cited:
- EP-A1- 3 644 278
- WO-A1-2015/009218
- WO-A1-2020/049089
- US-A1- 2008 056 535
- US-A1- 2010 332 126
- US-A1- 2014 172 290
- US-A1- 2020 109 532
- US-A1- 2020 349 362

## Description

### Technical field

The present invention relates to a crawler vehicle, and in particular a snow grooming vehicle, to a method for locating a crawler vehicle, and to a method for controlling a crawler vehicle.

### Background art

As is known, the localisation of a crawler vehicle is carried out by means GNSS systems (*Global Navigation Satellite Systems*), for example the American GPS system (*Global Positioning System*)*.* In order to operate, the navigation satellite system must receive signals from satellites. Therefore, if there are problems concerning the reception of such signals, the localisation could fail.

For example, in case of a snow grooming vehicle, there can be signal reception problems if the snow grooming vehicle operates in a closed environment or in a place where the mountain conformation does not allow for a good satellite signal reception.

WO2015009218A1 discloses a method and calculating unit in a vehicle, for determining the lane position of the vehicle on a road.

US2020109532A1 discloses a piste grooming vehicle having at least one piste grooming device for preparing a piste and a method for operating such a piste grooming vehicle.

US2014172290A1 discloses a navigation of on-road vehicle based on vertical elements.

A purpose of the present invention is to provide a crawler vehicle, in particular a snow grooming vehicle, a method for locating a crawler vehicle and a method for controlling a crawler vehicle, which can overcome or at least mitigate the aforementioned problems.

### Disclosure of the invention

The aforementioned purpose is achieved by a method for locating a crawler vehicle as claimed in claim 1.

Thanks to the present invention, a crawler vehicle can be located under any use condition and in any environment in which it is located, even in closed environments and/or even in areas where the position detection satellite signal cannot be received, for example in places where, due to the particular land conformation, the position detection signal of the satellites cannot be received or in remote areas of the globe that are not covered by position detection satellites.

The present invention also relates to a method for determining the height of the snowpack within a working region of a crawler vehicle as claimed in claim 7.

The present invention further relates to a method for controlling a crawler vehicle as claimed in claim 9.

The present invention further relates to a crawler vehicle as claimed in claim 11.

### Brief description of the drawings

For a better understanding of the present invention, a preferred embodiment is described below, by way of non-limiting example and with reference to the accompanying drawings, wherein:
- figure 1 is a side view of a crawler vehicle according to the present invention;
- figure 2 is a schematic view of the vehicle of figure 1 in a closed environment;
- figure 3 is a view from a point within a working region belonging to the closed environment of figure 2;
- figure 4 is a schematic view of the vehicle of figure 1 in an open environment;
- figure 5 is a view from a point within a working region belonging to the open environment of figure 4; and
- figure 6 is a block diagram of a location device of the vehicle of figure 1.

### Detailed description of the invention

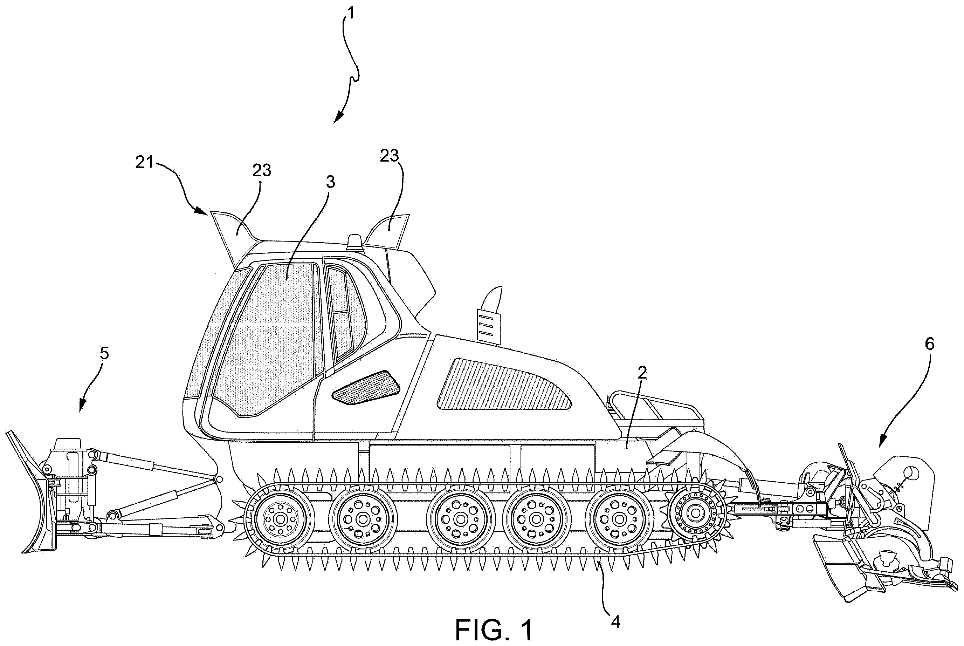

With reference to figure 1, there is indicated by 1 a crawler vehicle according to the present invention.

In the embodiment shown in figure 1, the crawler vehicle 1 is a snow grooming vehicle.

In another embodiment which is not shown herein, the crawler vehicle 1 is a vegetation management vehicle.

In another embodiment which is not shown herein, the crawler vehicle 1 is a multipurpose tracked vehicle to carry out tasks of different sorts in uneven grounds of different sorts.

The crawler vehicle 1 comprises a frame 2, a driver's cabin 3 housed on the frame 2, a pair of tracks 4 (only one of them being shown in figure 1) and at least one tool, for example a blade or shovel 5, supported at the front by the frame 2, and/or a tiller assembly 6, supported at the rear by the frame 2.

The crawler vehicle 1 can move within a working region 11, which can belong to a closed or open environment.

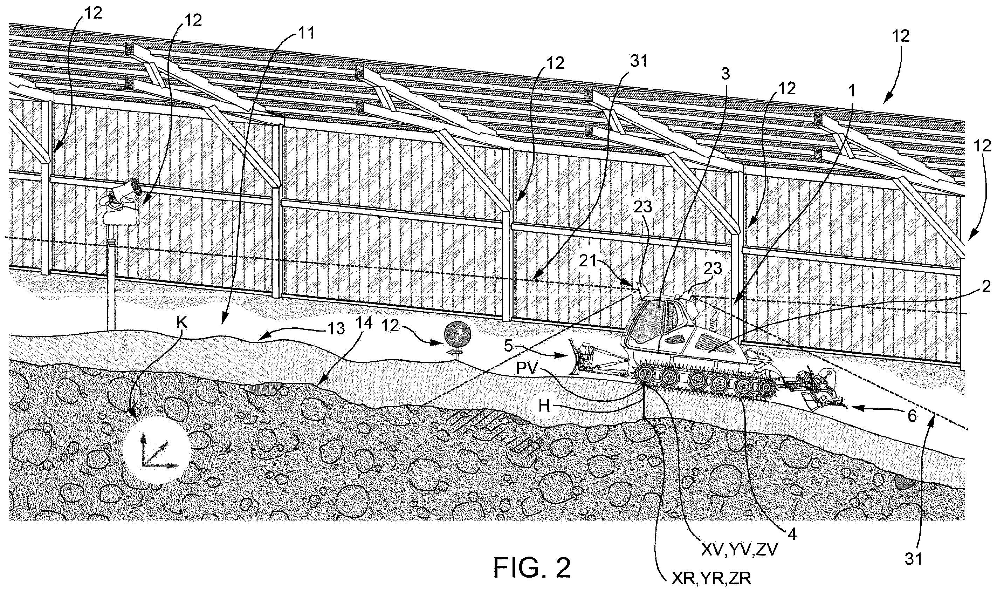

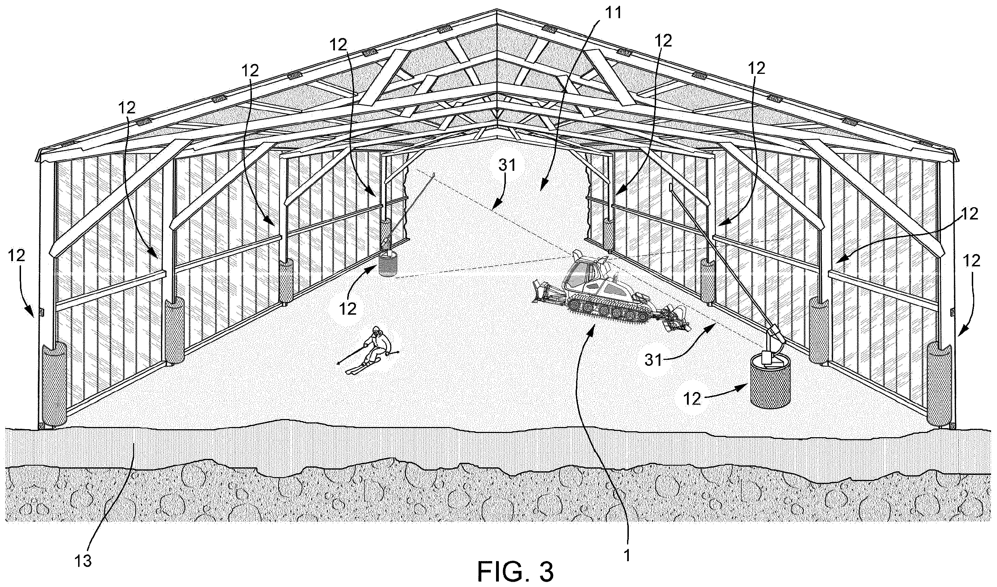

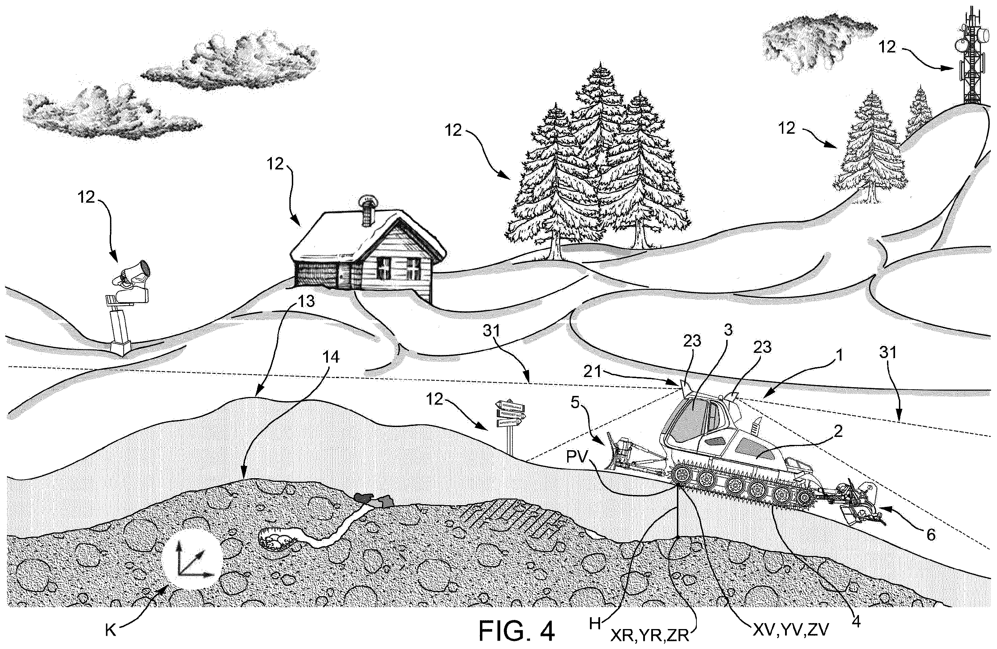

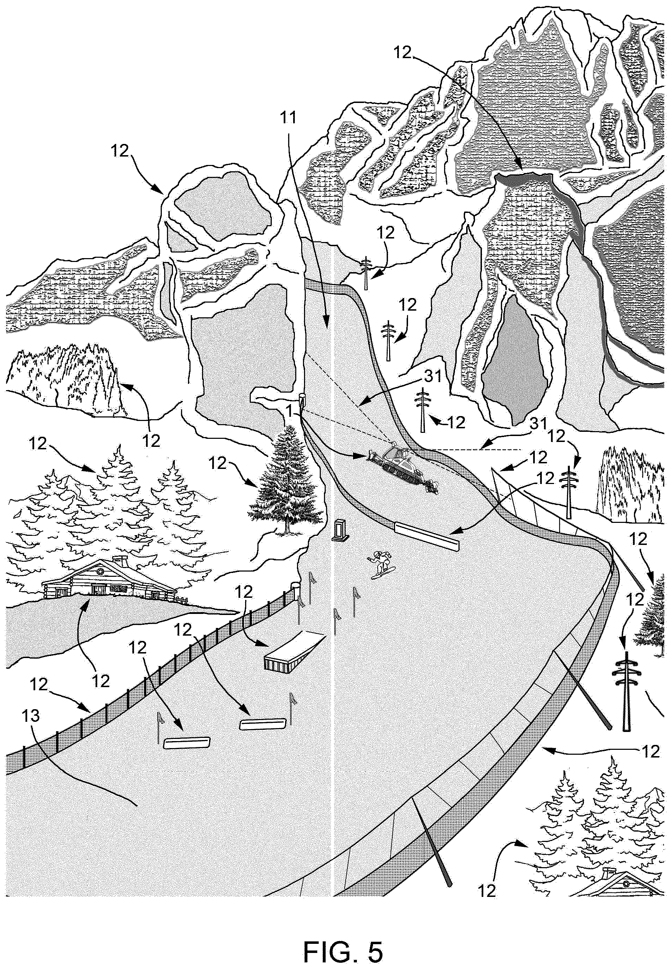

The working region 11 is preferably a ski slope, which can be indoor (figures 2 and 3) or outdoor (figures 4 and 5), and comprises at least one reference element 12.

In particular, the at least one reference element 12 is a physical object, or part thereof, visible from at least one point within the working region 11 and at least partly not covered by the snowpack 13.

The at least one reference element 12 can be an artificial element, for example a post or a station of a cableway, a snow cannon, a building of any kind, a fixed fence, a ceiling or a side wall of a covered ski area.

The at least one reference element 12 can be a natural element, for example a tree, a stone, a portion of a mountain or hill or plain.

With reference to figures 2 and 4, the crawler vehicle 1 comprises a location device 21, which is configured to determine a position PV of the crawler vehicle 1 within the working region 11, i.e. the position of a predetermined point of the crawler vehicle 1 with respect to a fixed reference system K.

The fixed reference system K can be a global reference system, i.e. the same of navigation satellite systems. Alternatively, the fixed reference system K can be a local reference system, i.e. relating to the working region 11. In this case, the origin of the fixed reference system K can be a predetermined point of the working region 11, for example a point belonging to the soil 14.

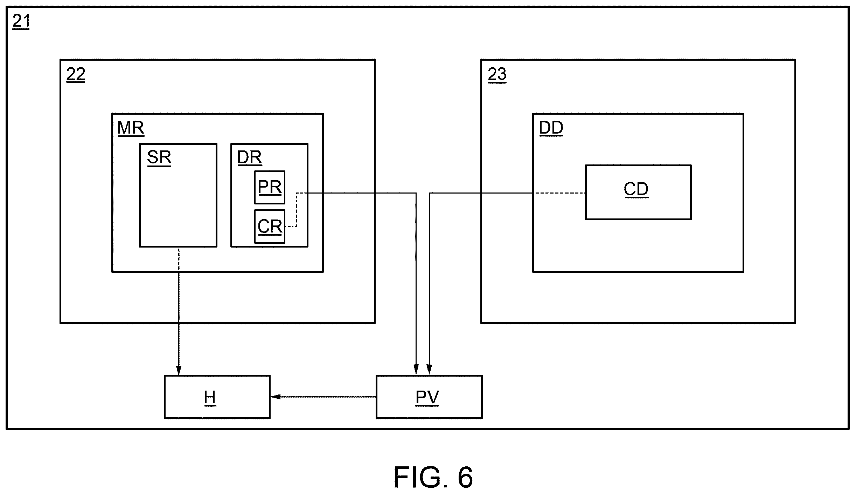

The location device 21 (figure 6) comprises a memory 22 and at least one sensor 23.

The memory 22 is configured to store a reference model MR of the working region 11 comprising reference data DR, relating to the at least one reference system 12 of the working region 11, and characterisation data SR, relating to a three-dimensional characterisation of the soil 14.

The characterisation data SR allows a three-dimensional model of the soil 14 to be obtained.

The reference data DR comprises a position PR and a conformation CR of the at least one reference element 12. In particular, each conformation CR is coupled to a respective position PR.

In particular, the conformation CR comprises data representative of a profile and/ profiles and/or an outline and/or outlines and/or a surface and/or surfaces and/or details of the at least one reference element 12.

Conveniently, the characterisation data SR and the position of the at least one reference element 12 are expressed via coordinates, for example Cartesian or cylindrical coordinates, with respect to the fixed reference system K.

The characterisation data SR relating to the soil 14 and/or the reference data DR relating to the at least one reference element 12, in particular the position PR and the conformation CR of the at least one reference element 12, can be acquired by three-dimensionally scanning the working region 11 and/or by three-dimensionally modelling the working region 11.

In an alternative embodiment, the characterisation data SR relating to the soil 14 are provided by a map produced by a third entity, for example a map provided by a military or civil geographical institute.

After such process, the three-dimensional reference model MR of the working region 11 is obtained, which can be changed. In particular, any change to the soil 14 and/or to the at least one reference element 12 can be reproduced in the reference model MR, by scanning again the working region 11 or part thereof and/or by three-dimensionally modelling again the working region 11 or part thereof. For example, a new reference element 12 can be added to the reference model MR and/or a reference element 12, already present in the reference model MR, can be removed or the position PR and/or the conformation CR thereof can be changed.

In a non-limiting embodiment of the present invention, the scanning performed to obtain the reference model MR is carried out with a crawler vehicle 1 with the at least one sensor 23.

In another non-limiting embodiment of the present invention, the location device 21 comprises a neural network and the reference model MR, or part thereof, is defined by the parameters of the configuration and/or of the setting of the neural network obtained via a learning process of the neural network, in other words the parameters of the reference model MR can be the parameters of the neural network properly trained with a learning process to recognise the reference elements 12 or the reference model MR can be defined by the neural network itself properly trained with a learning process to recognise the reference elements 12.

The at least one sensor 23 is preferably chosen from the group comprising lidar, radar, camera, video camera, thermal camera, proximity sensor preferably magnetic or ultrasonic.

The at least one sensor 23 is housed on the crawler vehicle 1, for example is rigidly coupled to the frame 2 or to the driver's cabin 3 or to one of the tools 5, 6 of the crawler vehicle 1.

In particular, the memory 22 is configured to store position and orientation of the at least one sensor 23 with respect to the crawler vehicle 1, i.e. with respect to the predetermined point of the crawler vehicle 1. Therefore, the location device 21 is configured to determine the position PV of the crawler vehicle 1, i.e. the position of the predetermined point of the crawler vehicle 1 with respect to the fixed reference system K, on the basis of the position and the orientation of the at least one sensor 23 with respect to the fixed reference system K, via kinematic relationships of transformation of reference systems.

Conveniently, the location device 21 is configured to determine, via kinematic relationships of transformation of reference systems, the orientation of the crawler vehicle 1, for example the orientation of a longitudinal axis along which the frame 2 extends, with respect to the fixed reference system K.

Furthermore, the location device 21 is configured to determine position and orientation of any component of the crawler vehicle 1, for example of the blade or shovel 5 and/or of the tiller assembly 6.

The at least one sensor 23 (figure 6) is configured to detect data DD relating to an area 31 of the working region 11 surrounding the crawler vehicle 1. Therefore, the area 31 moves together with the crawler vehicle 1. In particular, the area 31 is defined by the framing of the at least one sensor 23.

The data DD detected by the at least one sensor 23 comprise a conformation CD of the area 31 of the working region 11 surrounding the crawler vehicle 1.

The at least one sensor 23 is configured to cyclically scan the area 31 of the working region 11 surrounding the crawler vehicle 1 so as to detect the data DD relating to the area 31, in particular so as to detect a conformation CD of the area 31.

The location device 21 is configured to compare the data DD detected by the at least one sensor 23 with the reference data DR, so as to verify whether at least a part of the data DD detected by the at least one sensor 23 corresponds to, preferably at least a part of, the reference data DR.

Preferably, the detected data DD are in the same format as the reference data DR, so as to be easily comparable therewith.

In particular, the location device 21 is configured to seek correspondences between a conformation CD of the area 31 of the working region 11 surrounding the vehicle 1 and a conformation CR of the at least one reference element 12.

Furthermore, the location device 21 is configured to determine the position PV of the crawler vehicle 1 within the working region 11 on the basis of the comparison between the data DD detected by the at least one sensor 23 and the reference data DR.

In particular, the location device 21 is configured to determine the position PV of the crawler vehicle 1 on the basis of the position PR of the at least one reference element 12, if at least a part of the area 31 of the working region 11 surrounding the crawler vehicle 1 has a conformation CD corresponding to the conformation CR of the at least one reference element 12.

In other words, the location device 21 compares the conformation CD of the detected area 31 with the conformation CR of the at least one reference element 12 and, if at least a part of the conformation CD of the area 31 corresponds to the conformation CR of the at least one reference element 12, it determines position and orientation of the at least one sensor 23 of the crawler vehicle 1 and, in turn, the position PV of the crawler vehicle 1.

More in detail, the location device 21 compares the conformation CD of the detected area 31 with the conformation CR of the at least one reference element 12 and, if at least a part of the conformation CD of the area 31 corresponds to the conformation CR of the at least one reference element 12, it defines the position PV of the crawler vehicle 1 on the basis of the position PR coupled to the reference conformation CR that at least partly corresponds to the detected conformation CD.

More in detail, the location device 21 compares the conformation CD of the detected area 31 with the conformation CR of the at least one reference element 12 and, if at least a part of the conformation CD of the area 31 corresponds to the conformation CR of the at least one reference element 12, it reads from the memory 22 the position PR coupled to the reference conformation CR that at least partly corresponds to the detected conformation CD and determines position and orientation of the at least one sensor 23 of the crawler vehicle 1 based on such position PR and on values defined by the comparison between the conformation CD and the conformation CR.

In other words, position and orientation of the at least one sensor 23 are such that, looking at the reference model MR from such position and with such orientation, at least a part of the conformation CD of the area 31 corresponds to the conformation CR of the at least one reference element 12. Since the conformation CR of the at least one reference element is coupled to the respective position PR and stored in the memory 22, the location device 21 traces the position PV of the crawler vehicle 1.

Finally, the location device 21 defines the position PV and the orientation of the crawler vehicle 1 on the basis of the determined position and orientation of the at least one sensor 23.

In an embodiment, position and orientation of the at least one sensor 23 and of the crawler vehicle 1 coincide.

In another embodiment, position and orientation of the at least one sensor 23 and of the crawler vehicle 1 are linked to each other by a predetermined relationship, in particular the predetermined relationship can be a function or a matrix.

In other words, the location device 21 determines the position PV of the crawler vehicle 1 by cyclically detecting the conformations CD and, when one of them at least partly corresponds to one of the stored conformations CR, it uses the position PR, coupled to the conformation CR selected by the comparison, and the values defined by the comparison to define the position of the crawler vehicle 1. Preferably, the values defined by the comparison define distance and orientation between the reference element 12, identified by the comparison between the conformation CR and the conformation CD, and the at least one sensor 23.

Therefore, the present invention also relates to a method for locating a crawler vehicle 1 according to claim 1.

The position PV of the crawler vehicle 1 within the working region 11 can be used to determine the height H of the snowpack 13, which corresponds to the thickness of the snowpack 13 underneath the crawler vehicle 1.

Indeed, after having determined the position PV of the crawler vehicle 1 within the working region 11, the position PV of the crawler vehicle 1 can be compared with the reference model MR.

In particular, it is possible to calculate a difference H between a height ZV of the crawler vehicle 1 and a height ZR of the reference model MR, wherein:
- [XV, YV, ZV] is the position PV of the crawler vehicle 1 with respect to the fixed reference system K; and
- [XR, YR, ZR] is the position, with respect to the fixed reference system K, of a point belonging to the reference model MR, in particular it is the position of a point lying on the soil 14 and thus belonging to the characterisation data SR relating to the soil 14, so that XR = XV and YR = YV.

For the sake of convenience, PV can be chosen as the position of a point of the crawler vehicle 1 in contact with the snowpack 13. In this case, the height H of the snowpack 13 is equal to the difference H = ZV - ZR.

In case the snowpack 13 is not present, then ZR = ZV and thus H = 0, i.e. the crawler vehicle 1 lies on the soil 14.

The localisation of the crawler vehicle 1 and the height H of the snowpack 13 can be used to control the crawler vehicle 1.

In particular, the blade and/or shovel 5 and/or the tiller assembly 6 can be operated so as to conform the snowpack 13 to a target map, stored in the memory 22 and representative of a desired surface to be obtained by processing the snowpack 13.

Indeed, based on the localisation of the crawler vehicle 1, on the height H of the snowpack and on the target map, the blade and/or shovel 5 and/or the tiller assembly 6 can be operated so as to cause a removal of the snowpack 13 such as to conform the snowpack 13 to the target map.

In an alternative non-limiting embodiment of the present invention (which is not shown in the accompanying figures), the vehicle 1 is not a crawler vehicle and comprises a plurality of wheels comprising respective tyres.

Upon examination of the characteristics of the crawler vehicle 1 and of the methods, the advantages of the present invention are clear.

In particular, the localisation of the crawler vehicle 1 does not require navigation satellite systems and is possible even if the crawler vehicle 1 operates in a closed environment or in a place where the mountain conformation does not allow for a good satellite signal reception.

Furthermore, the localisation of the crawler vehicle 1 can be used to determine the height H of the snowpack 13 with no need for dedicated sensors.

Furthermore, the method for locating the crawler vehicle 1 and the method for determining the height H of the snowpack 13 can be used to control the crawler vehicle 1, thus allowing for an assisted or autonomous operation thereof.

In other words, thanks to the present invention, via the at least one sensor 23 of the location device 21, for example a lidar or a video camera, and without the aid of a GPS system, it is possible to determine the position PV of the crawler vehicle 1 by scanning the surrounding environment.

In particular, the location device 21 cyclically scans an area 31 surrounding the crawler vehicle 1 and, via the recognition of a reference element 12, for example the profile of a portion of a natural element present in the surrounding environment, such as a portion of a mountain or hill or plain, or a post or a station of a cableway or a snow cannon, determines the position of the crawler vehicle 1.

## Claims

1. Method for locating a crawler vehicle (1), in particular a snow grooming vehicle, within a working region (11), the working region (11) comprising at least one reference element (12), preferably the working region (11) being a ski slope, the method comprising the steps of:
a) acquiring a reference model (MR) of the working region (11) comprising reference data (DR) relating to the at least one reference element (12), wherein the reference data (DR) comprise a position (PR) and a conformation (CR) of the at least one reference element (12), the at least one reference element (12) being a physical object, or part thereof, visible from at least one point within the working region (11) and preferably at least partly not covered by snowpack (13);
b) detecting, via at least one sensor (23) of the vehicle (1), data (DD) relating to an area (31) of the working region (11) surrounding the vehicle (1); preferably the at least one sensor (23) being selected from the group comprising: lidar, radar, camera, video camera, thermal camera, proximity sensor preferably magnetic or ultrasonic; preferably the detected data (DD) being in the same format as the reference data (DR) ;
c) comparing the data (DD) detected by the at least one sensor (23) with the reference data (DR), to verify whether at least a part of the data (DD) detected by the at least one sensor (23) corresponds to, preferably at least a part of, the reference data (DR), wherein step c) comprises the step of seeking correspondences between a conformation (CD) of the area (31) of the working region (11) surrounding the vehicle (1) and the conformation (CR) of the at least one reference element (12); and
d) determining a position (PV) of the vehicle (1) within the working region (11) on the basis of the comparison between the data (DD) detected by the at least one sensor (23) and the reference data (DR), wherein step d) comprises the step of determining the position (PV) of the vehicle (1) on the basis of the position (PR) of the at least one reference element (12), at least a part of the area (31) of the working region (11) surrounding the vehicle (1) having a conformation (CD) corresponding to the conformation (CR) of the at least one reference element (12).

2. Method as claimed in claim 1, wherein the reference model (MR) comprises characterisation data (SR), relating to a three-dimensional characterisation of soil (14), and the reference data (DR) relating to the at least one reference element (12) of the working region (11).

3. Method as claimed in any of the preceding claims, wherein the data (DD) detected by the at least one sensor (23) comprise a conformation (CD) of the area (31) of the working region (11) surrounding the vehicle (1).

4. Method as claimed in any of the preceding claims, wherein step a) comprises the step of three-dimensionally scanning the working region (11).

5. Method as claimed in any of the preceding claims, wherein step a) comprises the step of three-dimensionally modelling the working region (11).

6. Method as claimed in any of the preceding claims, wherein the step b) comprises the step of cyclically scanning, via the at least one sensor (23), the area (31) of the working region (11) surrounding the vehicle (1) to detect the data (DD) relating to said area (31).

7. Method for determining the height (H) of the snowpack (13) within a working region (11) of a crawler vehicle (1), the method comprising the steps of determining the position (PV) of the vehicle (1) within the working region (11) as claimed in any of the preceding claims, and comparing the position (PV) of the vehicle (1) with the reference model (MR).

8. Method as claimed in claim 7, wherein the step of comparing the position (PV) of the vehicle (1) with the reference model (MR) comprises the step of calculating a difference (H) between an altitude (ZV) of the vehicle (1) and an altitude (ZR) of the reference model (MR).

9. Method for controlling a crawler vehicle (1), comprising the step of controlling the vehicle (1) comprising determining the location of the vehicle (1) by the location method as claimed in any of claims from 1 to 6, and determining the height (H) of the snowpack (13) by the method for determining the height (H) of the snowpack (13) as claimed in any of claims from 7 to 8.

10. Method as claimed in claim 9, wherein the vehicle (1) is a snow grooming vehicle movable on a snowpack (13) and comprises at least one tool (5, 6) configured to modify the snowpack (13), and wherein the step of controlling the vehicle (1) comprises the step of operating the at least one tool (5, 6) to conform the snowpack (13) to a target map representative of a desired surface to be obtained by processing the snowpack (13).

11. Crawler vehicle, movable within a working region (11), the working region (11) comprising at least one reference element (12), the vehicle (1) comprising a location device (21) comprising:
- at least one memory (22) configured to store a reference model (MR) of the working region (11) comprising reference data (DR) relating to the at least one reference element (12), wherein the reference data (DR) comprise a position (PR) and a conformation (CR) of the at least one reference element (12); and
- at least one sensor (23), preferably selected from the group comprising lidar, radar, camera, video camera, thermal camera, proximity sensor preferably magnetic or ultrasonic;
the at least one sensor (23) being configured to detect data (DD) relating to an area (31) of the working region (11) surrounding the vehicle (1),
the location device (21) being configured to:
- compare the data (DD) detected by the at least one sensor (23) with the reference data (DR), to verify whether at least a part of the data (DD) detected by the at least one sensor (23) corresponds to, preferably at least a part of, the reference data (DR), wherein the location device (21) is configured to seek correspondences between a conformation (CD) of the area (31) of the working region (11) surrounding the vehicle (1) and the conformation (CR) of the at least one reference element (12); and
- determine a position (PV) of the vehicle (1) within the working region (11) on the basis of the comparison between the data (DD) detected by the at least one sensor (23) and the reference data (DR), wherein the location device (21) is configured to determine the position (PV) of the vehicle (1) on the basis of the position (PR) of the at least one reference element (12), at least a part of the area (31) of the working region (11) surrounding the vehicle (1) having a conformation (CD) corresponding to the conformation (CR) of the at least one reference element (12).

## Patentansprüche

1. Verfahren zum Orten eines Raupenfahrzeugs (1), insbesondere eines Pistenpflegefahrzeugs, innerhalb einer Arbeitsregion (11), wobei die Arbeitsregion (11) zumindest ein Referenzelement (12) umfasst, wobei die Arbeitsregion (11) vorzugsweise eine Skipiste ist, und wobei das Verfahren die Schritte umfasst:
a) Erfassen eines Referenzmodells (MR) der Arbeitsregion (11), das Referenzdaten (DR) betreffend das zumindest eine Referenzelement (12) umfasst, wobei die Referenzdaten (DR) eine Position (PR) und die Konformation (CR) des zumindest einen Referenzelements (12) umfassen, wobei das zumindest eine Referenzelement (12) ein physisches Objekt oder ein Teil davon ist, das bzw. der von zumindest einem Punkt innerhalb der Arbeitsregion (11) aus sichtbar und vorzugsweise zumindest teilweise nicht von einer Schneedecke (13) bedeckt ist;
b) Erfassen, über zumindest einen Sensor (23) des Fahrzeugs (1), von Daten (DD) betreffend einen Bereich (31) der Arbeitsregion (11), die das Fahrzeug (1) umgibt; wobei der zumindest eine Sensor (23) vorzugsweise ausgewählt ist aus der Gruppe umfassend: Lidar, Radar, Kamera, Videokamera, Wärmebildkamera, Näherungssensor, vorzugsweise Magnet oder Ultraschall; wobei vorzugsweise die erfassten Daten (DD) im gleichen Format wie die Referenzdaten (DR) sind;
c) Vergleichen der von dem zumindest einen Sensor (23) erfassten Daten (DD) mit den Referenzdaten (DR), um zu verifizieren, ob zumindest ein Teil der von dem zumindest einen Sensor (23) erfassten Daten (DD) den Referenzdaten (DR), vorzugsweise zumindest einem Teil davon, entspricht, wobei Schritt c) den Schritt des Suchens nach Entsprechungen zwischen einer Konformation (CD) des Bereichs (31) der Arbeitsregion (11), die das Fahrzeug (1) umgibt, und der Konformation (CR) des zumindest einen Referenzelements (12) umfasst; und
d) Bestimmen einer Position (PV) des Fahrzeugs (1) innerhalb der Arbeitsregion (11) auf der Basis des Vergleichs zwischen den von dem zumindest einen Sensor (23) erfassten Daten (DD) und den Referenzdaten (DR), wobei Schritt d) den Schritt des Bestimmens der Position (PV) des Fahrzeugs (1) auf der Basis der Position (PR) des zumindest einen Referenzelements (12) umfasst, wobei zumindest ein Teil des Bereichs (31) der Arbeitsregion (11), die das Fahrzeug (1) umgibt, eine der Konformation (CR) des zumindest einen Referenzelements (12) entsprechende Konformation (CD) aufweist.

2. Verfahren nach Anspruch 1, wobei das Referenzmodell (MR) Charakterisierungsdaten (SR) betreffend eine dreidimensionale Charakterisierung von Boden (14) und die Referenzdaten (DR) betreffend das zumindest ein Referenzelement (12) der Arbeitsregion (11) umfasst.

3. Verfahren nach einem der vorhergehenden Ansprüche, wobei die von dem zumindest einen Sensor (23) erfassten Daten (DD) eine Konformation (CD) des Bereichs (31) der Arbeitsregion (11) umfassen, die das Fahrzeug (1) umgibt.

4. Verfahren nach einem der vorhergehenden Ansprüche, wobei Schritt a) den Schritt des dreidimensionalen Scannens der Arbeitsregion (11) umfasst.

5. Verfahren nach einem der vorhergehenden Ansprüche, wobei Schritt a) den Schritt des dreidimensionalen Modellierens der Arbeitsregion (11) umfasst.

6. Verfahren nach einem der vorhergehenden Ansprüche, wobei Schritt b) den Schritt des zyklischen Scannens, über den zumindest einen Sensor (23), des Bereichs (31) der Arbeitsregion (11), die das Fahrzeug (1) umgibt, umfasst, um die Daten (DD) betreffend den Bereich (31) zu erfassen.

7. Verfahren zum Bestimmen der Höhe (H) der Schneedecke (13) innerhalb einer Arbeitsregion (11) eines Raupenfahrzeugs (1), wobei das Verfahren die Schritte des Bestimmens der Position (PV) des Fahrzeugs (1) innerhalb der Arbeitsregion (11) nach einem der vorhergehenden Ansprüche und des Vergleichens der Position (PV) des Fahrzeugs (1) mit dem Referenzmodell (MR) umfasst.

8. Verfahren nach Anspruch 7, wobei der Schritt des Vergleichens der Position (PV) des Fahrzeugs (1) mit dem Referenzmodell (MR) den Schritt des Berechnens einer Differenz (H) zwischen einer Höhenlage (ZV) des Fahrzeugs (1) und einer Höhenlage (ZR) des Referenzmodells (MR) umfasst.

9. Verfahren zum Steuern bzw. Regeln eines Raupenfahrzeugs (1), umfassend den Schritt des Steuerns bzw. Regelns des Fahrzeugs (1), der ein Bestimmen des Standorts des Fahrzeugs (1) durch das Ortungsverfahren nach einem der Ansprüche 1 bis 6 und ein Bestimmen der Höhe (H) der Schneedecke (13) durch das Verfahren zum Bestimmen der Höhe (H) der Schneedecke (13) nach einem der Ansprüche 7 bis 8 umfasst.

10. Verfahren nach Anspruch 9, wobei das Fahrzeug (1) ein auf einer Schneedecke (13) bewegliches Pistenpflegefahrzeug ist und zumindest ein Werkzeug (5, 6) umfasst, das zum Modifizieren bzw. Bearbeiten der Schneedecke (13) konfiguriert ist, und wobei der Schritt des Steuerns bzw. Regelns des Fahrzeugs (1) den Schritt des Betätigens des zumindest einen Werkzeugs (5, 6) umfasst, um die Schneedecke (13) an eine Zielkarte bzw. ein Zielkennfeld anzupassen, die bzw. das eine durch die Bearbeitung der Schneedecke (13) zu erhaltende gewünschte Oberfläche darstellt.

11. Raupenfahrzeug, das innerhalb einer Arbeitsregion (11) beweglich ist, wobei die Arbeitsregion (11) zumindest ein Referenzelement (12) umfasst, wobei das Fahrzeug (1) eine Ortungsvorrichtung (21) umfasst, die umfasst:
- zumindest einen Speicher (22), der zum Speichern eines Referenzmodells (MR) der Arbeitsregion (11) konfiguriert ist, das Referenzdaten (DR) betreffend das zumindest eine Referenzelement (12) umfasst, wobei die Referenzdaten (DR) eine Position (PR) und eine Konformation (CR) des zumindest einen Referenzelements (12) umfassen; und
- zumindest einen Sensor (23), der vorzugsweise ausgewählt ist aus der Gruppe umfassend Lidar, Radar, Kamera, Videokamera, Wärmebildkamera, Näherungssensor, vorzugsweise Magnet oder Ultraschall;
wobei der zumindest eine Sensor (23) konfiguriert ist, Daten (DD) betreffend einen Bereich (31) der Arbeitsregion (11) zu erfassen, die das Fahrzeug (1) umgibt,
wobei die Ortungsvorrichtung (21) konfiguriert ist zum:
- Vergleichen der von dem zumindest einen Sensor (23) erfassten Daten (DD) mit den Referenzdaten (DR), um zu verifizieren, ob zumindest ein Teil der von dem zumindest einen Sensor (23) erfassten Daten (DD) den Referenzdaten (DR), vorzugsweise zumindest einem Teil davon, entspricht, wobei die Ortungsvorrichtung (21) konfiguriert ist, Entsprechungen zwischen einer Konformation (CD) des Bereichs (31) der Arbeitsregion (11), die das Fahrzeug (1) umgibt, und der Konformation (CR) des zumindest einen Referenzelements (12) zu suchen; und
- Bestimmen einer Position (PV) des Fahrzeugs (1) innerhalb der Arbeitsregion (11) auf der Basis des Vergleichs zwischen den von dem zumindest einen Sensor (23) erfassten Daten (DD) und den Referenzdaten (DR), wobei die Ortungsvorrichtung (21) konfiguriert ist, die Position (PV) des Fahrzeugs (1) auf der Basis der Position (PR) des zumindest einen Referenzelements (12) zu bestimmen, wobei zumindest ein Teil des Bereichs (31) der Arbeitsregion (11), die das Fahrzeug (1) umgibt, eine der Konformation (CR) des zumindest einen Referenzelements (12) entsprechende Konformation (CD) aufweist.

## Revendications

1. Procédé de localisation d'un véhicule (1) à chenille, en particulier un véhicule de damage de pistes, dans une région de travail (11), la région de travail (11) comprenant au moins un élément de référence (12), la région de travail (11) étant de préférence une piste de ski, le procédé comprenant les étapes suivantes :
a) acquérir un modèle de référence (MR) de la région de travail (11) comprenant des données de référence (DR) relatives à l'au moins un élément de référence (12), dans lequel les données de référence (DR) comprennent une position (PR) et une conformation (CR) de l'au moins un élément de référence (12), l'au moins un élément de référence (12) étant un objet physique ou une partie de celui-ci, visible depuis au moins un point dans la région de travail (11), et de préférence au moins partiellement non recouvert par une couverture de neige (13) ;
b) détecter, via au moins un capteur (23) du véhicule (1), des données (DD) relatives à une zone (31) de la région de travail (11) entourant le véhicule (1) ; l'au moins un capteur (23) étant de préférence choisi dans le groupe comprenant : un lidar, un radar, une caméra, une caméra vidéo, une caméra thermique, un capteur de proximité de préférence magnétique ou à ultrasons ; les données détectées (DD) étant de préférence dans le même format que les données de référence (DR) ;
c) comparer les données (DD) détectées par l'au moins un capteur (23) avec les données de référence (DR) afin de vérifier si au moins une partie des données (DD) détectées par l'au moins un capteur (23) correspond de préférence au moins en partie aux données de référence (DR), dans lequel l'étape c) comprend l'étape de recherche de correspondances entre une conformation (CD) de la zone (31) de la région de travail (11) entourant le véhicule (1) et la conformation (CR) de l'au moins un élément de référence (12) ; et
d) déterminer une position (PV) du véhicule (1) dans la région de travail (11) sur la base de la comparaison entre les données (DD) détectées par l'au moins un capteur (23) et les données de référence (DR), dans lequel l'étape d) comprend l'étape de détermination de la position (PV) du véhicule (1) sur la base de la position (PR) de l'au moins un élément de référence (12), au moins une partie de la zone (31) de la région de travail (11) entourant le véhicule (1) ayant une conformation (CD) correspondant à la conformation (CR) de l'au moins un élément de référence (12).

2. Procédé selon la revendication 1, dans lequel le modèle de référence (MR) comprend des données de caractérisation (SR) relatives à une caractérisation tridimensionnelle du sol (14) et les données de référence (DR) relatives à l'au moins un élément de référence (12) de la région de travail (11).

3. Procédé selon l'une des revendications précédentes, dans lequel les données (DD) détectées par l'au moins un capteur (23) comprennent une conformation (CD) de la zone (31) de la région de travail (11) entourant le véhicule (1).

4. Procédé selon l'une des revendications précédentes, dans lequel l'étape a) comprend l'étape de balayage en trois dimensions de la région de travail (11).

5. Procédé selon l'une des revendications précédentes, dans lequel l'étape a) comprend l'étape de modélisation en trois dimensions de la région de travail (11).

6. Procédé selon l'une des revendications précédentes, dans lequel l'étape b) comprend l'étape de balayage cyclique, via l'au moins un capteur (23), de la zone (31) de la région de travail (11) entourant le véhicule (1) afin de détecter les données (DD) relatives à ladite zone (31).

7. Procédé de détermination de la hauteur (H) de la couverture de neige (13) dans une région de travail (11) d'un véhicule (1) à chenille, le procédé comprenant les étapes de détermination de la position (PV) du véhicule (1) dans la région de travail (11) selon l'une des revendications précédentes, et la comparaison de la position (PV) du véhicule (1) avec le modèle de référence (MR).

8. Procédé selon la revendication 7, dans lequel l'étape de comparaison de la position (PV) du véhicule (1) avec le modèle de référence (MR) comprend l'étape de calcul d'une différence (H) entre une altitude (ZV) du véhicule (1) et une altitude (ZR) du modèle de référence (MR).

9. Procédé de commande d'un véhicule (1) à chenille, comprenant l'étape de commande du véhicule (1) comprenant la détermination de l'emplacement du véhicule (1) par le procédé de localisation selon l'une des revendications 1 à 6, et la détermination de la hauteur (H) de la couverture de neige (13) par le procédé de détermination de la hauteur (H) de la couverture de neige (13) selon l'une des revendications 7 et 8.

10. Procédé selon la revendication 9, dans lequel le véhicule (1) est un véhicule de damage de pistes mobile sur une couverture de neige (13) et comprend au moins un outil (5, 6) configuré pour modifier la couverture de neige (13), et dans lequel l'étape de commande du véhicule (1) comprend l'étape d'actionnement de l'au moins un outil (5, 6) pour conformer la couverture de neige (13) à une carte cible représentative d'une surface souhaitée à obtenir par le traitement de la couverture de neige (13).

11. Véhicule à chenille, mobile dans une région de travail (11), la région de travail (11) comprenant au moins un élément de référence (12), le véhicule (1) comprenant un dispositif de localisation (21) comprenant :
- au moins une mémoire (22) configurée pour stocker un modèle de référence (MR) de la région de travail (11) comprenant des données de référence (DR) relatives à l'au moins un élément de référence (12), dans lequel les données de référence (DR) comprennent une position (PR) et une conformation (CR) de l'au moins un élément de référence (12) ; et
- au moins un capteur (23), de préférence choisi dans le groupe comprenant un lidar, un radar, une caméra, une caméra vidéo, une caméra thermique, un capteur de proximité de préférence magnétique ou à ultrasons ;
l'au moins un capteur (23) étant configuré pour détecter des données (DD) relatives à une zone (31) de la région de travail (11) entourant le véhicule (1),
le dispositif de localisation (21) étant configuré pour :
- comparer les données (DD) détectées par l'au moins un capteur (23) avec les données de référence (DR) afin de vérifier si au moins une partie des données (DD) détectées par l'au moins un capteur (23) correspond de préférence au moins en partie aux données de référence (DR), dans lequel le dispositif de localisation (21) est configuré pour rechercher des correspondances entre une conformation (CD) de la zone (31) de la région de travail (11) entourant le véhicule (1) et la conformation (CR) de l'au moins un élément de référence (12) ; et
- déterminer une position (PV) du véhicule (1) dans la région de travail (11) sur la base de la comparaison entre les données (DD) détectées par l'au moins un capteur (23) et les données de référence (DR), dans lequel le dispositif de localisation (21) est configuré pour déterminer la position (PV) du véhicule (1) sur la base de la position (PR) de l'au moins un élément de référence (12), au moins une partie de la zone (31) de la région de travail (11) entourant le véhicule (1) ayant une conformation (CD) correspondant à la conformation (CR) de l'au moins un élément de référence (12).
